# EUROPEAN PATENT SPECIFICATION

(11) **EP 3 233 709 B1**
(45) Date of publication and mention of the grant of the patent: **19.02.2020**
(21) Application number: 15869406.7
(22) Date of filing: 16.12.2015
(51) Int. Cl.: B66C 6/00, E04C 3/29, F16S 3/00

(54) **MAIN GIRDER OF CRANE**
HAUPTTRÄGER EINES KRANS
POUTRE PRINCIPALE DE GRUE

(30) Priority: 19.12.2014 FI 20146122
(43) Date of publication of application: 25.10.2017
(73) Proprietor: Konecranes Global Corporation, 05830 Hyvinkää (FI)
(72) Inventor: PEIPPO, Juha, 05830 Hyvinkää (FI); AIKIO, Niina, 03100 Nummela (FI)
(74) Representative: Kolster Oy Ab
(86) International application number: PCT/FI2015/050892
(87) International publication number: WO 2016/097486

(56) References cited:
- EP-A1- 0 293 789
- DE-A1- 2 450 595
- DE-U1- 29 821 061
- FR-A1- 2 572 788
- JP-A- H0 692 589
- JP-A- 2004 059 161
- JP-U- S5 895 973
- KR-B1- 100 994 414
- SU-A1- 718 575
- US-A- 3 190 410
- US-A- 4 347 019
- US-A- 4 795 666
- US-A- 4 795 666

## Description

### Background of the invention

The invention relates to a main girder of a crane for a crane trolley moving in a horizontal direction along the girder, the main girder comprising a cellular structure in a longitudinal direction thereof that has at least two separate, yet interconnected, longitudinal cellular elements. On the top or bottom surface of the main girder in question there is or will be mounted as least one travel rail structure in a longitudinal direction of the main girder for the trolley.

Prior art main girders are typically beams that are made of relatively thick steel plates by welding or casing structures and have an upper plate, lower plate and one or more web plates between them. The travel rail structure is then preferably placed above the web plate so that local load caused by the trolley would be transferred to the web plate/plates.

To avoid web plate stability from being lost, the thickness of the plates used in the structure is increased and/or transverse and/or longitudinal reinforcements are added to the web until sufficient certainty against stability loss is obtained.

In these conventional solutions the number of parts is high and plenty of welding seams are used. The structure restricts minimizing of web plate thicknesses because then the number of reinforcements will be high. In some cases a conventional structure sets limits to utilization of strong steels.

Document US 3,190,410 (to Mölstad) discloses a main girder for a crane, according to the preamble of claim 1.

### Summary of the invention

It is an object of the invention to provide an improved main girder structure of crane, in which the above-mentioned problems are eliminated. This object is achieved by a main girder of the invention, which is characterized in that each cellular element comprises an outer cover structure and in that at least one outer cover structure has an inside filled with a core. Preferred embodiments of the invention are disclosed in the dependent claims.

The invention is based on an idea to form a main girder, preferably mainly entirely, as a modular structure by using in each case a required number of separate, yet interconnectable, cellular elements having a suitable shape and selectively filled with a core.

Because of the core, which may comprise foamed and/or solid material that may be e.g. glued or thermally attached, the cellular elements may comprise an outer cover structure formed of thinner material thickness than in the prior art. The foamed material may be plastic, such as polyurethane.

The invention enables very thin steel to be utilized in a beam-like structure in which one of the loads acting on it is a considerable concentrated crushing force. The invention enables a thin plate field to be made to function similarly as a thin plate field on a resilient base. It is thus possible to distribute a point load to more webs.

When implemented in this manner, the main girder of the invention will show increased stability against buckling and hence thinner material thicknesses than before may be made use of in the plate material of the main girder.

Other advantages that may be mentioned is a total mass reduction of as much as 30 to 40% in the structure, and the possibility to employ large-scale production methods in the manufacturing process of the main girder structure, which may reduce the required manufacturing time even to a quarter of what is needed when manufacturing a main girder with conventional methods. Moreover, no seams for fastening transverse intermediate plates, which reduce fatigue strength, are needed in the structure of the invention. Instead of acting on one web plate, a point load is now distributed among more than one web plates. This allows plate crushing to be prevented better than in existing structures.

### List of figures

The invention is now described in closer detail by means of the preferred embodiments and with reference to the accompanying drawings, in which:
Figure 1 shows a cross section of a prior art main girder;
Figure 2 is a perspective view of a main girder in accordance with the invention;
Figure 3 shows a cross section of the main girder according to Figure 2;
Figure 4 shows a cross section of an alternative main girder of the invention;
Figure 5 shows a cross section of a second alternative main girder of the invention;
Figure 6 shows a cross section of yet another alternative main girder of the invention; and
Figure 7 shows supporting of the main girder according to Figure 6 to an end support.

### Detailed description of the invention

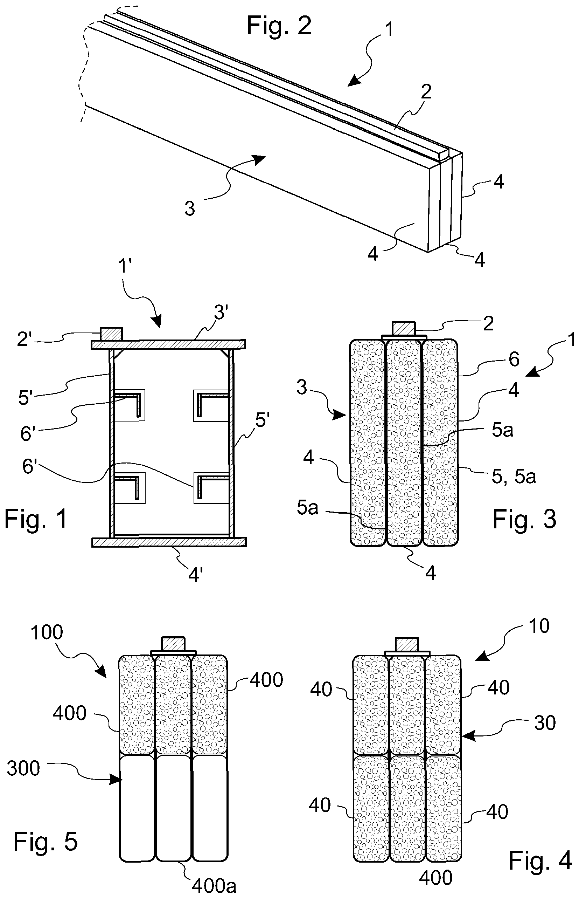

Figure 1 shows a prior art main girder 1' of a crane for a crane trolley (not shown) moving in a horizontal direction along the girder, which has a travel rail structure 2' for the trolley fastened on the upper surface thereof, in a longitudinal direction of the main girder. The main girder 1' is formed of a horizontal top plate 3' and bottom plate 4' and web plates 5' welded between these and provided with longitudinal reinforcements 6' and intermediate plates that remain inside a casing structure thus formed. The travel rail structure 2' is mounted on an upper surface of the main girder 1', on one side thereof, for transferring vertical loads caused by the trolley to a web structure 5' in an optimal manner. The top and bottom plates 3' and 4' in particular are significantly thick and heavy. The reinforcements 6' have made it possible to reduce the thickness of the web plates 5' but, on the other hand, they also are one cause of increased robustness of the structure.

Next, a reference is made to Figures 2 and 3 which illustrate a solution according to the invention. The figures show a main girder 1 of a crane for a crane trolley (not shown) moving in a horizontal direction along the girder, which has a travel rail structure 2 for the trolley mounted on the upper surface thereof, in a longitudinal direction of the main girder. Here the main girder 1 comprises, in a longitudinal direction thereof, a cellular structure 3 with separate, yet interconnected, longitudinal cellular elements 4. The minimum number of the cellular elements 4 is two. In this example there are three parallel cellular elements 4 which are attached together in a sealed and rigid manner with longitudinal welding seams (not shown) at top and bottom seam positions.

In this example, the cellular elements 4 extend substantially on the entire length of the main girder 1, thus replacing the prior art casing structure altogether. The cellular elements 4 are rectangular and greater in height than in width.

Each cellular element 4 comprises an outer cover structure 5 and a core 6 of solid or foamed material that fills the inside of the outer cover structure 5. The foamed material may be polyurethane, for example, that adheres well to the inner surface of the outer cover structure 5. The outer cover structure 5 has vertical sides 5a that form the actual web structure, but the core 6 serves as an additional reinforcement and thus a considerably thin material may be used in the entire outer cover structure 5 in comparison with a prior art cover structure.

The travel rail structure 2 has been mounted immediately on top of the cellular structure 3, symmetrically in the middle of the main girder 1, and thus the load caused by the trolley travelling on the travel rail structure 2 is distributed to each vertical side 5a of the cellular structure 3, which form the web structure of the main girder 1 in question.

In Figure 4 the cellular structure 30 of the main girder 10 comprises parallel and superimposed cellular elements 40. There may also be more or less of the cellular elements 40 or a different number in different layers, in which case the web structures do not necessarily need to coincide. There are numerous alternatives implementing the invention. In this example all the cellular elements 40 are filled with a core 60.

Figure 5 shows a cellular structure 300 of a main girder 100 which is otherwise similar to the one in Figure 4 except that only the uppermost cellular elements 400 have a core 600 while the lowermost cellular elements 400a are empty. If so desired, some of the cellular elements in any cellular structure of a main girder of the invention may be full, i.e. filled with a core, while others may be empty, i.e. without a core. The drawings illustrate some examples only.

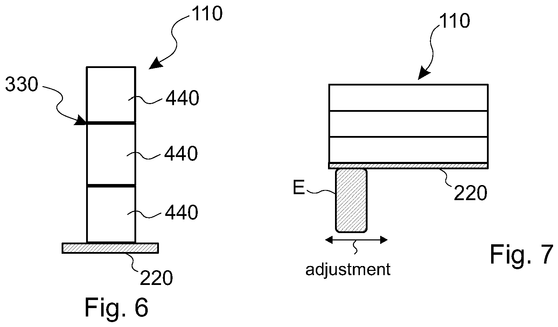

Figure 6 shows a cellular structure 330 of a main girder 110 with three superimposed cellular elements 440, one or more of which is also filled with a core (not shown). In this example the trolley is supported to the bottom surface of the main girder 110 and, for this purpose, the bottom surface of the cellular structure 330 is provided with a flange structure 220 in a longitudinal direction of the main girder 110 for the trolley.

In the cellular structures of the invention, the cellular elements may be of different heights or sizes, the upper and the lower cellular elements may have a "common" flange in the middle, and the cellular elements may be interconnected by an additional plate/plates although these implementations are not separately shown in the drawings.

Figure 7 shows how the positioning of the main girder 110 on an end support E may be adjusted in the structure of the invention, the structure of Figure 6 being used here as an example, in the longitudinal direction of the main girder 110 without a risk of the structure buckling. In the prior art, the main girder is conventionally provided with transverse intermediate plates reinforcing the web at the support between the main girder and an end girder. In that case the point of support is determined already during the manufacture of the main girder. The present invention enables this restriction to be avoided.

The above description of the invention is only intended to illustrate the basic idea of the invention. A person skilled in the art may thus vary its details within the scope of the attached claims. Hence the number of the cellular elements, their shape and mutual positioning may vary as required and, therefore, the scope of the invention covers numerous other implementation alternatives in addition to the implementations disclosed here merely as examples.

## Claims

1. A main girder (1; 10; 100) for a crane comprising at least one travel rail structure (2) for a crane trolley moving in a horizontal direction along the travel rail structure (2) arranged on the top surface of the main girder (1; 10; 100), symmetrically in the middle of the main girder (1; 10; 100), the main girder comprising a cellular structure (3; 30; 300) in a longitudinal direction thereof that has at least two separate, yet interconnected, longitudinal cellular elements (4; 40; 400), whereby the travel trail structure (2) is mounted immediately on top of the cellular structure (3; 30; 300); the cellular structure comprises at least two parallel cellular elements (4; 40) or parallel and superimposed cellular elements (400), **characterised in that** each cellular element (4; 40; 400) comprises an outer cover structure (5) with vertical sides (5a), that at least one outer cover structure (5) has an inside filled with a core (6; 60; 600) comprising foamed material and/or solid material, and the load caused by the trolley travelling on the travel rail structure (2) is distributed to each vertical side (5a) of the cellular structure.

2. A main girder as claimed in claim 1, **characterized in that** the foamed material is plastic, e.g. polyurethane.

3. A main girder as claimed in claim 1, **characterized in that** at least the selected cellular elements (4; 40; 400) extend substantially on the entire length of the main girder (1; 10; 100).

4. A main girder as claimed in claim 1, **characterized in that** each cellular element (4; 40; 400) is greater in height than in width.

5. A main girder as claimed in claim 1, **characterized in that** the cellular structure (3; 30; 300) comprises cellular elements (4; 40; 400) having a substantially rectangular cross-section.

6. A main girder as claimed in claim 1, **characterized in that** the cellular structures (4; 40; 400) are attached together in a sealed and rigid manner.

## Patentansprüche

1. Hauptträger (1; 10; 100) für einen Kran, der mindestens eine Laufschienenstruktur (2) für einen Kranwagen umfasst, der sich in eine horizontale Richtung entlang der Laufschienenstruktur (2) bewegt, die auf der oberen Fläche des Hauptträgers (1; 10; 100) symmetrisch in der Mitte des Hauptträgers (1; 10; 100) angeordnet ist, wobei der Hauptträger eine Zellstruktur (3; 30; 300) in einer Längsrichtung davon umfasst, die mindestens zwei separate, aber verbundene längs verlaufende Zellelemente (4; 40; 400) umfasst, wodurch die Laufschienenstruktur (2) unmittelbar oben auf der Zellstruktur (3; 30; 300) montiert ist; die Zellstruktur mindestens zwei parallele Zellelemente (4; 40) oder parallele und übereinanderliegende Zellelemente (400) umfasst, **dadurch gekennzeichnet, dass**
jedes Zellelement (4; 40; 400) eine äußere Abdeckungsstruktur (5) mit vertikalen Seiten (5a) umfasst, dass mindestens eine äußere Abdeckungsstruktur (5) eine Innenseite aufweist, die mit einem Kern (6; 60; 600) gefüllt ist, der ein geschäumtes Material und/oder festes Material umfasst, und die Last, die von dem auf der Laufschienenstruktur (2) laufenden Wagen verursacht wird, auf jede vertikale Seite (5a) der Zellstruktur verteilt wird.

2. Hauptträger nach Anspruch 1, **dadurch gekennzeichnet, dass** das geschäumte Material Kunststoff ist, z.B. Polyurethan.

3. Hauptträger nach Anspruch 1, **dadurch gekennzeichnet, dass** sich mindestens die ausgewählten Zellelemente (4; 40; 400) im Wesentlichen über die gesamte Länge des Hauptträgers (1; 10; 100) erstrecken.

4. Hauptträger nach Anspruch 1, **dadurch gekennzeichnet, dass** jedes Zellelement (4; 40; 400) in der Höhe größer ist als in der Breite.

5. Hauptträger nach Anspruch 1, **dadurch gekennzeichnet, dass** die Zellstruktur (3; 30; 300) Zellelemente (4; 40; 400) mit einem im Wesentlichen rechteckigen Querschnitt umfasst.

6. Hauptträger nach Anspruch 1, **dadurch gekennzeichnet, dass** die Zellstrukturen (4; 40; 400) in einer abgedichteten und starren Weise aneinander befestigt sind.

## Revendications

1. Poutre principale (1 ; 10 ; 100) pour une grue comprenant au moins une structure de rail de déplacement (2) pour un chariot de pont roulant se déplaçant dans une direction horizontale le long de la structure de rail de déplacement (2) agencée sur la surface supérieure de la poutre principale (1 ; 10 ; 100), symétriquement au milieu de la poutre principale (1 ; 10 ; 100), la poutre principale comprenant une structure cellulaire (3 ; 30 ; 300) dans sa direction longitudinale qui a au moins deux éléments cellulaires longitudinaux séparés mais interconnectés (4 ; 40 ; 400), moyennant quoi la structure de rail de déplacement (2) est montée immédiatement sur le dessus de la structure cellulaire (3 ; 30 ; 300) ; la structure cellulaire comprend au moins deux éléments cellulaires (4 ; 40) parallèles ou des éléments cellulaires (400) parallèles et superposés, **caractérisée en ce que** :
chaque élément cellulaire (4 ; 40 ; 400) comprend une structure de recouvrement externe (5) avec des côtés verticaux (5a), **en ce qu'**au moins une structure de recouvrement externe (5) a un intérieur rempli avec un noyau (6 ; 60 ; 600) comprenant un matériau en mousse et/ou un matériau solide, et la charge provoquée par le chariot qui se déplace sur la structure de rail de déplacement (2) est répartie de chaque côté vertical (5a) de la structure cellulaire.

2. Poutre principale selon la revendication 1, **caractérisée en ce que** le matériau en mousse est du plastique, par exemple du polyuréthane.

3. Poutre principale selon la revendication 1, **caractérisée en ce qu'**au moins les éléments cellulaires (4 ; 40 ; 400) sélectionnés s'étendent sensiblement sur toute la longueur de la poutre principale (1 ; 10 ; 100).

4. Poutre principale selon la revendication 1, **caractérisée en ce que** chaque élément cellulaire (4 ; 40 ; 400) est plus grand en hauteur qu'en largeur.

5. Poutre principale selon la revendication 1, **caractérisée en ce que** la structure cellulaire (3 ; 30 ; 300) comprend des éléments cellulaires (4 ; 40 ; 400) ayant une section transversale sensiblement rectangulaire.

6. Poutre principale selon la revendication 1, **caractérisée en ce que** les structures cellulaires (4 ; 40 ; 400) sont fixées ensemble d'une manière étanche et rigide.
